# EUROPEAN PATENT APPLICATION

(11) **EP 4 814 908 A2**
(43) Date of publication of application: **30.09.2026**
(21) Application number: 26168254.6
(22) Date of filing: 26.03.2026
(51) Int. Cl.: G07C 9/00, A42B 3/30, B60R 25/24

(54) **A DEVICE FOR REMOTELY UNLOCKING A VEHICLE AND A METHOD THEREOF**

(30) Priority: 29.03.2025 IN 202541030776
(71) Applicant: TVS Motor Company Limited, 600006 Chennai (IN)
(72) Inventor: Joshi, Neeraj, 600006 Chennai (IN); Nanjundaswamy, Likith Malavalli, 600006 Chennai (IN)
(74) Representative: Patentanwaltskanzlei Matschnig & Forsthuber OG

(57) **Abstract**

The claimed subject matter discloses a helmet controller 102, a vehicle controller 104, and methods 300, 500 to unlock a vehicle. The method 500 comprises receiving 502 a unique identifier transmitted by a helmet controller 102, comparing 504 the received unique identifier with at least one pre-stored unique identifier, checking 506, when the received unique identifier matches with at least one pre-stored unique identifier, whether a helmet 103 associated with the unique identifier is a 'registered helmet' and unlocking 508 the vehicle 105 if the helmet 103 is a registered helmet.

## Description

### TECHNICAL FIELD

The claimed subject matter in general relates to vehicle access control systems. The claimed subject matter in particular relates to getting accessibility to a vehicle through a smart helmet.

### BACKGROUND

Presently, the accessibility to motor vehicles is through a key or a key fob. In some vehicles, it may be through a mobile app running on a mobile phone.

However, the key, key fob have certain challenges, in that, the key, key fob may be tampered, stolen, duplicated. In such scenarios, unauthorized persons may get access to the vehicle. Also, the signals from the key fob may be captured and replayed later leading to unauthorized access of the vehicle. Similarly, the mobile phone or the application may be manipulated, stolen to get unauthorized access to the vehicle.

For the two wheeled motor vehicle, referred as a vehicle, rider needs a helmet during a ride for safety. Additionally the rider needs to carry the key to access the vehicle. This causes inconvenience to the rider when he forgets to carry the helmet or the key. Also the key, key fobs have above mentioned challenges.

Hence, there is a need for a device which provides safety as well as secure access to the vehicle.

The claimed subject matter addresses the above discussed issues.

### SUMMARY

The claimed subject matter is defined in the independent claims. Further details are defined in the dependent claims.

The claimed subject matter discloses a system for remote access of a vehicle. The system comprises a helmet comprising a helmet controller, a vehicle controller in the vehicle and a mobile phone for running an application. The mobile phone is referred as mobile.

In an aspect, the claimed subject matter discloses a method for providing access to a motor vehicle, the performed by a helmet controller in a helmet. The method comprises detecting a press of a power button on the helmet, retrieving a pre-stored unique identifier and sending the unique identifier to a vehicle controller.

In an aspect, the claimed subject matter discloses a helmet controller in a helmet, the helmet controller comprising a processor, a memory and other interfaces to communicate with the vehicle controller.

In an aspect, the claimed subject matter discloses a method for accessing a vehicle, the method performed by the vehicle controller in a vehicle. The method comprises receiving an unique identifier transmitted by a helmet controller, comparing the received unique identifier with at least one pre-stored unique identifier, checking when the received unique identifier matches with at least one pre-stored unique identifier, whether the helmet associated with the unique identifier is registered and unlocking the vehicle, if the helmet is registered.

In an aspect, the claimed subject matter discloses a method for preparing a helmet controller for unlocking a vehicle, the method performed by a mobile phone, the method comprising pairing the mobile phone with a helmet controller, receiving a unique identifier from the helmet controller, storing the unique identifier in the mobile phone, updating the status of the unique identifier in a table to indicate that the helmet associated with the unique identifier is registered, pairing with a vehicle controller, sending the unique identifier to the vehicle controller and sending a command to the vehicle controller to register the helmet associated with the unique identifier.

In an aspect, the claimed subject matter discloses a method for de-registering a helmet, the method performed by the mobile phone and the vehicle controller. The method performed by the mobile phone comprises selecting a unique identifier through a menu, updating the status of the unique identifier in a table as de-registered to indicate that the helmet associated with the unique identifier is de-registered, sending the unique identifier to the vehicle controller and sending a command to the vehicle controller to de-register the helmet associated with the unique identifier.

The method performed by the vehicle controller to deregister the helmet comprises receiving a unique identifier, deleting the unique identifier from a table, sending the unique identifier to the mobile phone and sending a response to the mobile phone indicating that the helmet associated with the unique identifier is de-registered.

### BRIEF DESCRIPTION OF THE DRAWINGS

The detailed description is described with reference to the accompanying figures. In the figures, similar reference numerals are used throughout the drawings to reference like features and components.
Figure 1 illustrates a system for providing access to a vehicle, according to one embodiment of the disclosure.
Figure 2 illustrates details of a helmet controller and a vehicle controller.
Figure 3 illustrate method of accessing a vehicle using a helmet
Figure 4 illustrates a method of preparing the helmet and the vehicle for accessing the vehicle using the helmet
Figure 5 illustrates a method of unlocking the vehicle
Figure 6 illustrates a method of de-registering a helmet by the mobile phone
Figure 7 illustrates a method of de-registering a helmet by the vehicle controller

### DETAILED DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may indicate a two wheeled motor vehicle. The term 'coupled' is used to indicate coupling between different elements, it may mean directly coupled or indirectly coupled through additional elements. The terms 'module' and 'component' may be used interchangeably. The terms 'Rider' and 'User' may be used interchangeably.

Only the details/components required to describe the claimed subject matter in specific, are disclosed in this document. The details/components which are commonly known or understood by people skilled in the art may not be covered in this document.

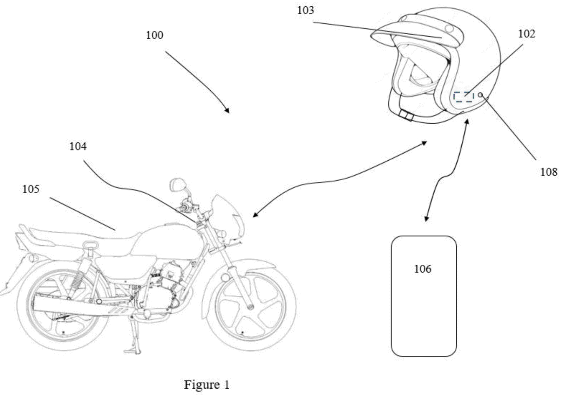

Figure 1 discloses a system 100 for providing access to a vehicle 105 through a smart helmet 103. The system 100 comprises a vehicle controller 102, a smart helmet 103 and a mobile phone 106. The smart helmet 103 is referred as helmet 103. The helmet 103 comprises a controller referred as helmet controller 102. The mobile phone 106, the helmet controller 102 and the vehicle controller 104 work together or in combination, to register and de-register the helmet 103 with the vehicle 105 and to enable the user to unlock the vehicle 105 using the helmet 103. The helmet controller 102 is also referred as a device.

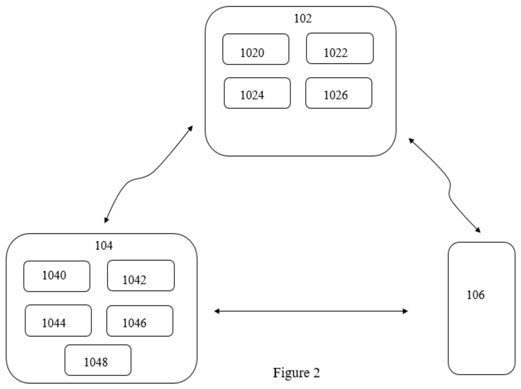

Shown in figure 2 are the internals of the helmet controller 102 and the vehicle controller 104. The helmet controller 102 comprises a processor 1020, a memory 1022 coupled to the processor 1020, a communication unit 1024 and input output interfaces 1026 etc. In an embodiment the communication unit 1024 may be external to the helmet controller 102 and may be connected through the input output interfaces 1026. The input output interfaces 1026 may comprise input ports, output ports, buttons, a set of lamps or LEDs to indicate the status of the communication with the vehicle controller 104 etc. The vehicle controller 104 comprises similar components as of the helmet controller, i.e. the processor 1040, a memory 1042 coupled to the processor 1040, a communication unit 1044 and input output interfaces 1046 etc. In an embodiment the communication unit 1044 may be external to the vehicle controller 104 and may be connected through the input output interfaces 1046. The processor 1020 in the helmet controller and the processor 1040 in the vehicle controller are configured using their control registers, input ports, output ports, input output interfaces, firmware etc. to perform the functionalities descried herein. The vehicle controller 104 comprises a table 1048 in the memory 1042. The table 1048 comprises two columns. The first column is used to store the unique identifiers and the second column is used to store the status of the unique identifiers. The unique identifier may be a number or a name/label to identify a helmet. The status of the unique identifier may be in one of the two states, which are 'Registered helmet' or 'De-registered helmet'. The communication units 1024 and 1044 handle all the communication between the helmet controller 104, the vehicle controller 102 and the mobile phone 106.

The units referred herein may be implemented in hardware or firmware or a combination. For example the communication unit 1024 may comprise standard radio frequency circuits, filters, firmware, input output ports, protocol implementations or a combination of these. The communication unit 1024 establishes communication with the vehicle controller 104 and a mobile phone 106 using wireless technology and standard protocols.

When the helmet 103 is to be used for the first time to access a vehicle the helmet controller 102 needs to be paired with the vehicle controller 104 and the mobile phone 106. The helmet 103 is provided with a power button 108. The power to the helmet controller 102 may be provided by a battery which is not shown in figure 1.

An application is run on the mobile phone 106 to prepare the helmet controller 102 and the vehicle controller 104 for providing access to the vehicle 105. The power button 108 is pressed on the helmet 103. The helmet controller 102 starts broadcasting a unique identifier. Using the application the mobile phone 106 pairs with the helmet controller 102. The mobile phone 106 may use Bluetooth connection or NFC, or any wireless communication to connect to the helmet controller 102. When the mobile phone 106 pairs with the helmet controller 102, the mobile phone receives the unique identifier from the helmet controller 102. In an embodiment the unique identifier may be a Media Control Access, MAC, address of the helmet controller 102. The unique identifier is stored in the mobile phone 106 in a table T. This is done only for the first time when the helmet 103 is new.

Next mobile phone 106 pairs with the vehicle controller 104. The mobile phone 106 may use Bluetooth connection or NFC, or any wireless communication to connect to the vehicle controller 104. Once the mobile phone 106 is paired with the vehicle controller 104, the unique identifier of the helmet controller 102 is sent to the vehicle controller 104. The mobile phone sends a command to the vehicle controller to register the helmet 103 associated with the unique identifier. The vehicle controller 104 stores the unique identifier of the helmet controller 102 in the table 1048. The vehicle controller 104 stores the status of the helmet associated with the unique identifier as 'Registered helmet' in the table 1048. As there may be multiple helmets authorized to access the vehicle 105, the vehicle controller 104 maintains the table 1048 where each unique identifier and its status are maintained. The status indicating whether the helmet associated with the unique identifier is 'Registered helmet' or 'De-registered helmet'.

The vehicle controller 104 sends a response to the mobile phone 106 indicating that the helmet associated with the unique identifier is registered. The mobile phone 106 also maintains a table T in the phone, where each unique identifier and their status are maintained. The status indicating whether the helmet associated with the unique identifier is 'Registered helmet' or 'De-registered helmet'. Once the response is received from the vehicle controller 104, the mobile phone 106 updates the table T with the unique identifier and its status as 'Registered helmet'. The mobile application provides an option for the user to assign a name or a label to the registered helmet. If a label/name of the helmet is entered, the same is stored in the table T in the mobile phone, otherwise unique identifier is stored in the table T in the mobile phone 106.

When the response from the vehicle controller 104 is received by the mobile phone 106, the mobile phone 106 generates a random key and sends the same to the helmet controller 102 and the vehicle controller 104. The random key may be a 128 bit random key. The random key is stored securely in the helmet controller 102 and the vehicle controller 104 for encrypting and decrypting any data transmitted between the helmet controller 102 and the vehicle controller 104. The random key and the encryption/decryption provide a secure communication between the helmet controller 102 and the vehicle controller 104 thereby eliminating unauthorized access of the vehicle.

Now the helmet 103 is ready to provide access to the vehicle 105.

When the user wants to unlock the vehicle 105, he presses the power button 108. The helmet controller 102, through the input output interfaces 1026, detects the pressing of the power button 108. The helmet controller 102 encrypts its unique identifier using the stored random key and sends the encrypted unique identifier to the vehicle controller 104. The vehicle controller 104 receives the unique identifier and decrypts it using the stored random key. The unique identifier is compared with the unique identifiers stored in the table 1048 in the vehicle controller 104. If a match is found, then the status of the unique identifier is checked in the table 1048. If the status of the unique identifier is 'Registered helmet', the vehicle controller 104 unlocks the vehicle. If the unique identifier is not found in the table 1048 or the status of the unique identifier is 'De-registered helmet', the vehicle controller 104 ignores the communication from the helmet controller 102.

Unlocking the vehicle comprises at least one of unlocking the handle lock and connecting a battery to the fuel injection system of the vehicle 105. Unlocking of the handle lock may be performed by a solenoid. The solenoid is controlled by the input output interfaces 1046 of the vehicle controller 104. Connecting battery to the fuel injection system of the vehicle 105 may be performed by an electronic switch by connecting the battery of the vehicle 105 to the fuel injection system in the vehicle 105. Now the vehicle 105 is unlocked and ready for the user to start.

When the helmet 103 which is registered with the vehicle controller 104, is lost, the helmet 103 needs to be de-registered. Also the owner of the vehicle 105 can de-register the helmet, at any time. It is done through the same mobile application on the mobile phone 106. The user selects an option in the application on the mobile phone 106 to display the registered helmets from the table T. The list of helmets registered is shown. The helmets may be identified by numbers, labels or names. The label/name of the helmet may be entered while registering the helmet 103. The user selects the label of the helmet 103 to be de-registered. Once the user confirms, the mobile phone 106 sends the unique identifier assigned to the selected helmet 103 to the vehicle controller 104. The mobile phone 106 also sends a command to the vehicle controller 104 to de-register the helmet 103 for which the unique identifier is sent. Once the command is received, the vehicle controller 104 deletes the entries of the helmet 103, i.e. the unique identifier, the status etc. are deleted from the table 1048. After deleting the entries of the helmet 103, the unique identifier and an acknowledgement is sent to the mobile indicating that the helmet 103 associated with the unique identifier is de-registered. In an embodiment, the unique identifier may be retained in the table 1048 and the status of the unique identifier is updated as 'De-registered helmet'. Retaining of the unique identifier has the advantage in that the history of the users is available for any analysis in the later stages.

The processors 1020 and 1040 may comprise one or more of central processing units (CPU), digital signal processors (DSP), application specific integrated circuits (ASIC), a controller, field programmable gate arrays (FPGA), or any other hardware device, a firmware device, or any combination of these. The processors are configured using control registers, input output ports, firmware, input output interfaces etc. to perform the operations described herein.

In an embodiment, the memory 1022 and 1042 comprise one or more volatile and nonvolatile memory components which are capable of storing data and instructions to be executed.

In an embodiment, the vehicle controller 104 may be implemented in any existing Electronic Control Unit, ECU, in the vehicle 105.

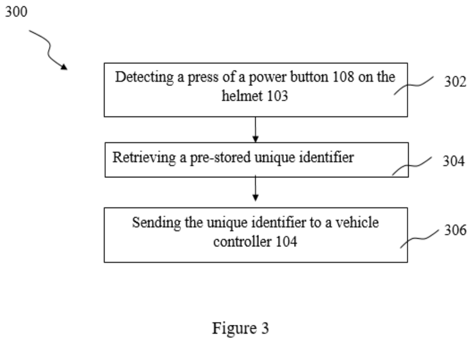

Figure 3 illustrates a method 300 for accessing a vehicle 105 using a helmet 103. The method 300 is performed by the helmet controller 102. Step 302 comprises detecting a press of a power button 108 on the helmet 103. Step 304 comprises retrieving a pre-stored unique identifier. Step 306 comprises sending the unique identifier to the vehicle controller 104.

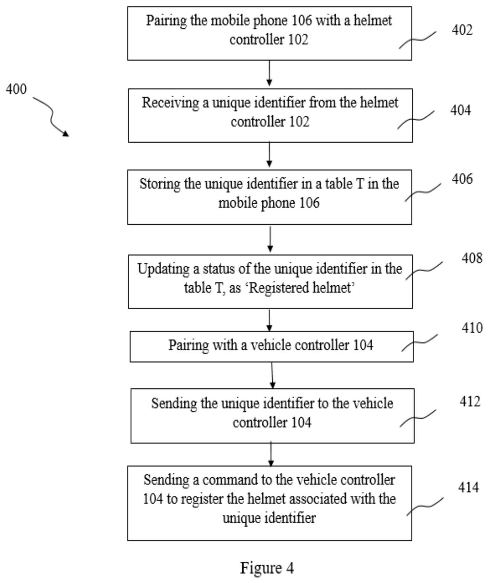

Figure 4 illustrates a method 400 for preparing the helmet 103 and the vehicle 105 for accessing the vehicle 105 using the helmet 103. The method 400 is performed by the mobile phone 106. Step 402 comprises pairing the mobile phone 106 with the helmet controller 102. Step 404 comprises receiving a unique identifier from the helmet controller 102. Step 406 comprises storing the unique identifier in a table T in the mobile phone 106. Step 408 comprises updating a status of the unique identifier in the table T, as 'Registered helmet', to indicate that the helmet 103 associated with the unique identifier is registered. Step 410 comprises pairing with a vehicle controller 104. Step 412 comprises sending the unique identifier to the vehicle controller 104. Step 412 comprises sending a command to the vehicle controller 104 to register the helmet 103 associated with the sent unique identifier.

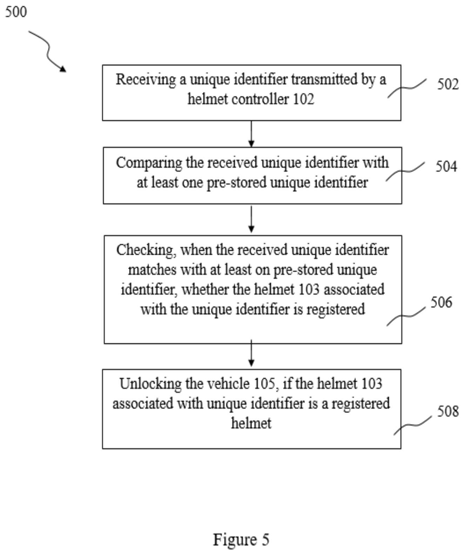

Figure 5 illustrates a method 500 for unlocking the vehicle 105. The method 500 is performed by the vehicle controller 102. Step 502 comprises receiving a unique identifier from a helmet controller 102. Step 504 comprises comparing the received unique identifier with at least one pre-stored unique identifier. Step 506 comprises checking, when the received unique identifier matches with at least one pre-stored unique identifier, whether the helmet 103 associated with the unique identifier is registered by reading the status of the matched unique identifier from the table 1048. Step 506 comprises unlocking the vehicle 105, if the helmet 103 is a registered helmet.

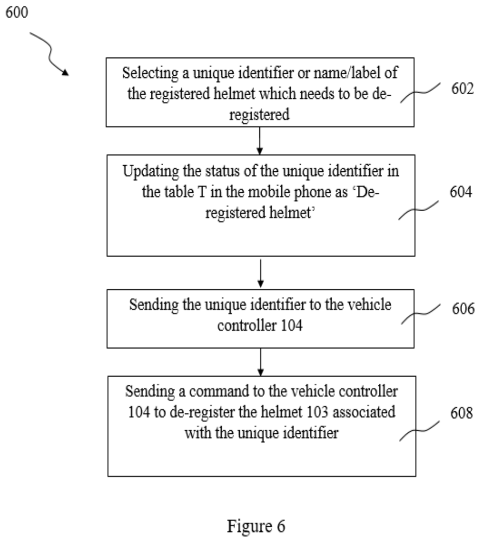

Figure 6 illustrates a method 600 for de-registering a helmet 103 by the mobile phone 106. Step 602 comprises selecting a unique identifier or name/label of the registered helmet which needs to be de-registered, in the mobile application on the mobile phone 106. Step 604 comprises updating the status of the unique identifier in the table T in the mobile phone, to indicate that the helmet 103 associated with the unique identifier is de-registered. Step 606 comprises sending the unique identifier to the vehicle controller 104. Step 608 comprises sending a command to the vehicle controller 104 to de-register the helmet 103 associated with the unique identifier.

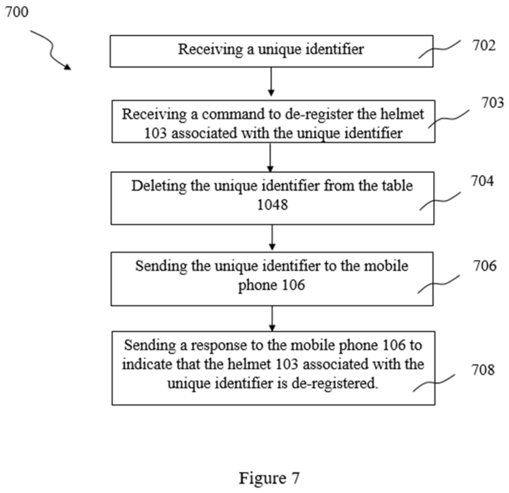

Figure 7 illustrates a method 700 for de-registering a helmet 103 by the vehicle controller 102. The step 702 comprises receiving a unique identifier. The step 703 comprises receiving a command from the mobile phone indicating that the helmet 103 associated with the sent unique identifier is to be de-registered. The step 704 comprises deleting the unique identifier from the table 1048. The step 706 comprises sending the unique identifier to the mobile phone 106. The step 708 comprises sending a response to the mobile phone 106 to indicate that the helmet 103 associated with the sent unique identifier is de-registered.

The system 100 comprises three devices, i.e. helmet controller 102, vehicle controller 104 and the mobile phone 106. These three devices need to be paired. The helmet and helmet controller 102 need to be registered and de-registered with the vehicle controller 104 and the mobile phone 106. Hence these devices have their own methods of registering, de-registering and normal functioning. The claimed subject matter covers all these methods and devices for the system to work under different scenarios.

The claimed disclosure has the following technical advantages.

The claimed subject matter eliminates the need for carrying physical keys, preventing issues related to key loss, theft, or duplication.

The claimed subject matter allows riders to remotely disable or replace a lost/damaged helmet and securely pair a new one, preventing unauthorized access to the vehicle.

The system 100 continuously monitors for valid helmet signals, ensuring a seamless and secure unlocking experience without requiring repeated manual authentication.

The system 100 can be linked to smartphone applications and cloud-based vehicle security systems, enabling additional functionalities like location tracking, theft alerts, and remote access management.

The system 100 can be customized for various two-wheeler models without requiring major modifications to existing electronic control units.

The claimed subject matter encourages helmet usage by making it an essential part of the vehicle access system, potentially increasing overall rider safety.

Using Bluetooth Low Energy (BLE) or NFC-based communication ensures minimal battery drain on both the helmet and the vehicle's security system.

### LIST OF REFERENCE NUMERALS

- 100: System to unlock a vehicle using a helmet
- 102: Helmet controller
- 103: Helmet
- 104: Vehicle controller
- 105: Vehicle
- 106: Mobile phone
- 108: Power button on the vehicle
- 1020: Processor in helmet controller
- 1022: Memory in helmet controller
- 1024: Communication unit in helmet controller
- 1026: Interfaces in helmet controller
- 1040: Processor in vehicle controller
- 1042: Memory in vehicle controller
- 1044: Communication unit in vehicle controller
- 1046: Interfaces in vehicle controller
- 1048: Table in the vehicle controller to store unique identifier and the status

## Claims

1. A helmet controller (102) in a helmet (103), the helmet (103) to be used for unlocking a vehicle (105), the helmet controller (102) comprising:
a processor (1020); and
a memory (1022) coupled to the processor (1020);
the processor (1020) configured to:
detect a press of a power button (108) on the helmet (103);
retrieve a pre-stored unique identifier; and
send the unique identifier to a vehicle controller (104).

2. The helmet controller (102), as claimed in claim 1, wherein the unique identifier sent to the vehicle controller (104) is encrypted using a random key before sending to the vehicle controller (104), wherein the unique identifier is a Media Access Control address.

3. The helmet controller (102), as claimed in claim 1 comprising a communication unit (1024) configured to communicate with the vehicle controller (104) using at least one of a Bluetooth communication, Near Field Communication and a Wi-Fi communication.

4. A method (300) to provide access to a vehicle (105), the method (300) performed by a helmet controller (102), the method (300) comprising:
detecting (302) a press of a power button (108) on the helmet (103);
retrieving (304) a pre-stored unique identifier; and
sending (306) the unique identifier to a vehicle controller (104).

5. The method (300) as claimed in claim 4, wherein sending the unique identifier to the vehicle controller (104) comprises encrypting the unique identifier using a random key before sending.

6. A method (400) of preparing a helmet controller (102) for unlocking a vehicle (105), the method (400) performed by a mobile phone (106), the method (400) comprising:
pairing (402) the mobile phone (106) with a helmet controller (102);
receiving (404) a unique identifier from the helmet controller (102);
storing (406) the unique identifier in the mobile phone (106);
updating (408) a status of the unique identifier as 'registered helmet';
pairing (410) with a vehicle controller (104);
sending (412) the unique identifier to the vehicle controller (104); and
sending (414) a command to the vehicle controller (104) to register the helmet (103) associated with the unique identifier.

7. The method (400) as claimed in claim 6, comprising:
generating a random key to be used for encryption and decryption of data between the helmet controller (102) and the vehicle controller (104);
storing the random key in the mobile phone (106);
sending the random key to the vehicle controller (104); and
sending the random key to the helmet controller (102).

8. A method (500) for remotely unlocking a vehicle (105), the method (500) performed by a vehicle controller (104), the method (500) comprising:
receiving (502) a unique identifier transmitted by a helmet controller (102);
comparing (504) the received unique identifier with at least one pre-stored unique identifier;
checking (506), when the received unique identifier matches with at least one pre-stored unique identifier, whether a helmet (103) associated with the unique identifier is a 'registered helmet'; and
unlocking (508) the vehicle (105), if the helmet (103) is a registered helmet.

9. The method (500) as claimed in claim 8, wherein, checking whether the helmet (103) associated with the unique identifier is a registered helmet, comprises checking the status of the unique identifier.

10. The method (500) as claimed in claim 8, wherein unlocking the vehicle (105) comprises at least one of unlocking the handle lock of the vehicle (105) and connecting a battery in the vehicle (105) to a fuel injection system in the vehicle (105).

11. A vehicle controller (104) for remotely unlocking a vehicle (105), the vehicle controller (104) comprising:
a processor (1040); and
a memory (1042) coupled to the processor (1040);
the processor (1040) configured to:
receive a unique identifier transmitted by a helmet controller (102);
compare the received unique identifier with a pre-stored unique identifier;
check, when the received unique identifier matches with at least one pre-stored unique identifier, whether a helmet (103) associated with the unique identifier is a 'registered helmet'; and
unlock the vehicle (105), if the helmet (103) is a registered helmet.

12. The vehicle controller (104) as claimed in claim 11, comprising an unlocking mechanism to unlock a handle lock of the vehicle (105), the unlocking mechanism comprising at least one solenoid.

13. The vehicle controller (104) as claimed in claim 11, comprising a power supply control mechanism to connect a battery in the vehicle (105) to a fuel injection system in the vehicle (105), to enable a user to start the vehicle (105), the power supply control mechanism comprising at least one electronic switch.

14. A method (600) to de-register a helmet controller, the method performed by a mobile phone (106), the method (600) comprising:
selecting (602) a unique identifier;
updating (604) a status of the unique identifier as 'de-registered helmet';
sending (606) the unique identifier to the vehicle controller (104); and
sending (608) a command to the vehicle controller (104) to de-register the helmet (103) associated with the unique identifier.

15. A method (700) to de-register a helmet controller, the method performed by a vehicle controller (104), the method (700) comprising:
receiving (702) a unique identifier;
receiving (703) a command indicating that the helmet (103) associated with the unique identifier is to be de-registered;
deleting (704) the unique identifier from the table (1048);
sending (706) the unique identifier to the mobile phone (106); and
sending (708) a response to the mobile phone (106) indicating that the helmet (103) associated with the unique identifier is de-registered.
